Europäisches Patentamt

European Patent Office

Office européen des brevets

(19)

(11) Veröffentlichungsnummer : **0 087 631**
**B1**

(12)  # EUROPÄISCHE PATENTSCHRIFT

(45) Veröffentlichungstag der Patentschrift :
**15.05.85**

(51) Int. Cl.⁴ : **F 16 D 66/02**

(21) Anmeldenummer : **83101256.2**

(22) Anmeldetag : **10.02.83**

(54) **Bremsbelagverschleiss-Anzelgevorrichtung für Festsattel-Scheibenbremsen.**

(30) Priorität : **02.03.82 DE 3207457**

(43) Veröffentlichungstag der Anmeldung :
**07.09.83 Patentblatt 83/36**

(45) Bekanntmachung des Hinweises auf die Patenterteilung : **15.05.85 Patentblatt 85/20**

(84) Benannte Vertragsstaaten :
**AT BE DE FR GB IT NL**

(56) Entgegenhaltungen :
**DE-A- 1 910 320**
**DE-A- 2 734 786**
**DE-A- 3 023 105**
**DE-B- 2 438 485**
**DE-B- 2 705 179**
**US-A- 2 790 516**

(73) Patentinhaber : **Knorr-Bremse GmbH**
**Moosacher Strasse 80**
**D-8000 München 40 (DE)**

(72) Erfinder : **Bleker, Dieter**
**Fichtenstrasse 86**
**D-5630 Remscheid (DE)**
Erfinder : **Stein, Werner**
**Birkenstrasse 4**
**D-5630 Remscheid (DE)**

EP 0 087 631 B1

Jouve, 18, rue St-Denis, 75001 Paris, France

**Beschreibung**

Die Erfindung bezieht sich auf eine Bremsbelagverschleiß-Anzeigevorrichtung für Festsattel-Scheibenbremsen, mit durch ihre axiale Lage relativ zum Bremssattel den Verschleißzustand anzeigenden Bolzen und bei welchen die beiden gegenläufig an eine Bremsscheibe anpressbaren Bremsbacken an zwei parallel zur Achsrichtung der Bremsscheibe verlaufenden, beiderseits in Bohrungen des Bremssattels eingreifenden Bolzen geführt sind. Eine derartige Vorrichtung ist z. B. der DE-B-24 38 485 entnehmbar.

Es ist vielfach bekannt, die Bremsbacken von Teilbelag-Scheibenbremsen mittels zweier parallel zur Achsrichtung der Bremsscheibe verlaufenden, in Umfangsrichtung der Bremsscheibe zueinander versetzt angeordneten Bolzen zu haltern und zu führen. Die Bremsbacken sind dabei an ihrer Rückseite mit Belagträgerblechen verbunden, die ihrerseits mittels Bohrungen verschieblich an den Bolzen geführt sind. Die Bolzenenden greifen beiderseits in Sack- oder Durchgangsbohrungen des Bremssattels ein. Weiterhin sind die Bolzen in ihrer axialen Lage relativ zum Bremssattel gesichert, beispielsweise kann gemäß der DE-A-19 10 320 eine Formfeder vorgesehen sein, deren Enden in Querbohrungen der Bolzen eingreifen und die an ihrem mittleren Abschnitt am Bremssattel gehaltert ist.

Für Festsattel-Scheibenbremsen sind Bremsbelagverschleiß-Anzeigevorrichtungen bekannt, bei welchen ein Bremsbacken bzw. dessen Belagträgerblech mit einem zur Bremsscheibe achsparallelen Stift oder Bolzen gekoppelt ist, dessen gut sichtbares Ende im Neuzustand des Belages eine Seitenfläche des Bremssattels um das Verschleißmaß überragt oder entsprechend hinter dieser endet, bei vollständiger Abnützung des mit ihm gekoppelten Bremsbelages dagegen in einer Ebene mit der Seitenfläche endet (US-A-2 790 516, DE-B-24 38 485, DE-B-27 05 179. Der Stift bzw. Bolzen zeigt hierbei durch seine axiale Lage relativ zum Bremssattel den Verschleißzustand des Bremsbelages an. Es ist bekannt, den Stift bzw. Bolzen mit einer elektrischen Schaltvorrichtung derart zu koppeln. daß bei Erreichen seiner dem vollen Verschleißzustand entsprechenden Lage ein Schaltvorgang für ein Schauzeichen ausgelöst wird. Diese Bremsbelagverschleiß-Anzeigevorrichtungen können jedoch nur den Verschleißzustand des Bremsbelages zur einen Seite der Bremsscheibe anzeigen, der Verschleißzustand des anderseitigen Bremsbelages wird nicht erfaßt und angezeigt. Außerdem kann unmittelbar optisch die Lage des Stiftes bzw. Bolzens jeweils nur von einer Seite der Bremsscheibe aus erkannt werden, wodurch das Erkennen des Verschleißzustandes erschwert sein kann. Schließlich erfordern die Bremsbelagverschleiß-Anzeigevorrichtungen zusätzliche, nur für diesen Zweck erforderliche Bauteile, wodurch sich ein zusätzlicher Bauaufwand ergibt.

Die Erfindung geht aus von einem Stand der Technik, wie er entsprechend den eingangs genannten Merkmalen aus den vorstehend erwähnten DE-B-24 38 485 und 27 05 179 entnehmbar ist.

Der Erfindung liegt die Aufgabe zugrunde, eine Bremsbelagverschleiß-Anzeigevorrichtung der eingangs genannten Art mit möglichst geringem Aufwand derart auszubilden, daß der Verschleißzustand beider Bremsbeläge angezeigt wird. Diese Aufgabe wird nach der Erfindung dadurch gelöst, daß die beiden Bremsbacken zumindest in ihrer jeweiligen Anpreßrichtung an die Bremsscheibe mit jeweils einem der ansonsten axial verschieblich beiderseits im Bremssattel und am jeweils andersseitigen Bremsbacken geführten Bolzen gekoppelt sind. Die Bolzen erfüllen bei dieser Anordnung eine Doppelfunktion, nämlich gemeinsam die Führung bzw. Halterung beider je einen Bremsbelag aufweisenden Bremsbacken und einzeln die Anzeige des Verschleißzustandes jeweils eines der beiden Bremsbeläge ; durch diese Doppelfunktion kann der Bauaufwand gering gehalten werden.

Weitere vorteilhafte Ausgestaltungsmöglichkeiten der Erfindung sind den Unteransprüchen entnehmbar. Der Unteranspruch 2 beschreibt dabei eine sehr einfache, beim Belagtausch leicht lösbare Koppelung der Bolzen mit den Bremsbacken auf. Nach Unteranspruch 4 ergibt sich ohne Mehraufwand die Möglichkeit, den Verschleißzustand beider Bremsbeläge von jeweils beiden Seiten der Scheibenbremse aus zu erkennen. Die Ausbildung nach Unteranspruch 5 ermöglicht nach einem Belagtausch eine einfache Kontrolle von einer Seite der Scheibenbremse aus, ob die Bremsbeläge und Bolzen richtig eingesetzt sind, und die Anordnung nach Unteranspruch 6 führt zu einer sehr einfachen Erkennbarkeit des vollen Verschleißzustandes eines bzw. beider Bremsbeläge.

In der Zeichnung ist ein Ausführungsbeispiel einer nach der Erfindung ausgebildeten Bremsbelagverschleiß-Anzeigevorrichtung schematisch dargestellt, und zwar zeigt

Figur 1 die Anzeigevorrichtung bei einer Scheibenbremse mit neuen, unverschlissenen Bremsbelägen und

Figur 2 die Anzeigevorrichtung bei bis auf das Grenzmaß verschlissenen Bremsbelägen.

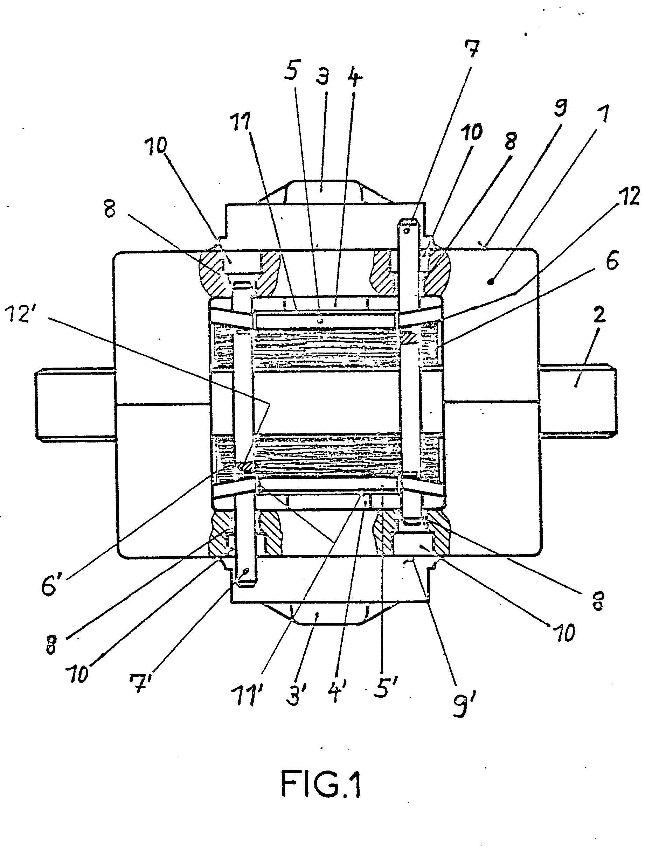

Wie aus Figur 1 ersichtlich ist der gegebenenfalls geteilt ausgeführte Bremssattel 1 einer Festsattel-Scheibenbremse beiderseits der von ihm übergriffenen Bremsscheibe 2 mit im einzelnen nicht dargestellten Zuspannorganen 3, 3', vorzugsweise hydraulischen Bremszylindern, versehen, welche vermittels Stößeln 4, 4' gegen die Rückseite von Belagträgerblechen 5, 5' drücken können. Die beiden Belagträgerbleche 5 und 5' sind auf ihren der Bremsscheibe 2 zugewandten Seiten gemäß Fig. 1 mit unverschlissenen Bremsbelägen 6, 6' belegt. Der Außenrand der Bremsscheibe 2 ist von zwei in Umfangsrichtung der Bremsscheibe 2 versetzt zueinander angeordneten Bolzen 7, 7' übergriffen, die beide parallel zur Achse der Bremsscheibe 2 verlaufen. Die Bolzen 7 und 7' durchgreifen im einzelnen nicht dargestellte Bohrungen in den Belagträgerblechen 5 und 5' und greifen mit ihren Enden in Durchgangslöcher des Bremssattels 1 ein. Die Durchgangslöcher 8 sind mit nach außen, zu den Seitenflächen 9, 9' des Bremssattels 1 hin offenen, erweiterten Endabschnitten 10 versehen, deren Tiefe dem Verschleißmaß der Bremsbeläge, d. h. dem Differenzmaß zwischen unverschlissenem und verschlissenem Bremsbelag 6 bzw. 6' entspricht. Die Bolzen 7 und 7' weisen eine Länge auf, welche der Breite des Bremssattels 1, also dem Abstand der beiden Seitenflächen 9 und 9' des Bremssattels 1 voneinander entspricht. Jedes Belagträgerblech 5 bzw. 5' ist mit dem mittleren Bereich einer Formfeder 11 bzw. 11' verbunden, deren eines Ende in jeweils eine Querbohrung 12 bzw. 12' eines Bolzens 7 bzw. 7' eingreift und deren anderes Ende den anderen Bolzen 7' bzw. 7 untergreift und federnd von unten an diesen anliegt. Die Formfedern 11, 11' weisen zweckmäßig, parallel zur Ebene der Bremsscheibe 2 in deren Umfangsrichtung gesehen, eine U-förmige Gestalt auf, mit welcher sie auf die Belagträgerbleche 5, 5' von oben aufschiebbar sind, derart, daß sich die mittleren Bereich der Formfedern 11, 11' jeweils auf der den Stößel 4, 4' zugewandten Seiten der Belagträgerbleche 5, 5' und ihre mit den Bolzen 7, 7' zusammenwirkenden Enden auf den den Bremsbelägen 6, 6' zugewandten Seite der Belagträgerbleche 5, 5' befinden.

Die Querbohrungen 12, 12' sind derart angeordnet, daß bei neuen, unverschlissenen Bremsbelägen 6, 6' gemäß Fig. 1 die Bolzen 7 und 7' durch die Formfedern 11, 11' unsymmetrisch gehalten werden : Der Bolzen 7 steht dabei über die in Fig. 1 oben dargestellte Seitenfläche 9 um etwa das Verschleißmaß vor, während er andererseits etwa am Grund des Endabschnittes 10 des unten rechts nach Fig. 1 befindlichen Durchgangsloches 8 innerhalb des Bremssattels 1 endet ; der Bolzen 7' befindet sich hierzu in einer axial versetzten Lage, derart, daß er die Seitenfläche 9' um das Verschleißmaß ins Freie überragt und andererseits im oben links in Fig. 1 dargestellten Durchgangsloch 8 etwa am Grund des Endabschnittes 10 endet. Von jeder Seite der Scheibenbremse ist dabei erkennbar, daß die Bremsbeläge 6, 6' unverschlissen sind, da das Überstandmaß des jeweils einen Bolzens 7 bzw. 7' bzw. das im Bereich des Grundes des Endabschnittes 10 liegende Ende des anderen Bolzens 7' bzw. 7 jeweils klar zu sehen sind. An den Stellungen der Bolzen ist die richtige Montage der unverschlissenen Bremsbeläge 6, 6' und der Bolzen 7, 7' erkennbar.

Bei Verschleiß der Bremsbeläge 6, 6' nähern sich die beiden Belagträgerbleche 5, 5' der Bremsscheibe 2 an, wobei das Belagträgerblech 5 über die Formfeder 11 den Bolzen 7 und das Belagträgerblech 5' über die Formfeder 11' den Bolzen 7' mitnimmt. Die Bolzen 7 und 7' nähern sich dabei einer zentrierten Lage im Bremssattel 1 an, wobei ihr Überstand bzw. die Rückversetzung ihres Endes, bezogen auf die Seitenflächen 9 bzw. 9', sich entsprechend dem eingetretenen Verschleiß verkleinern.

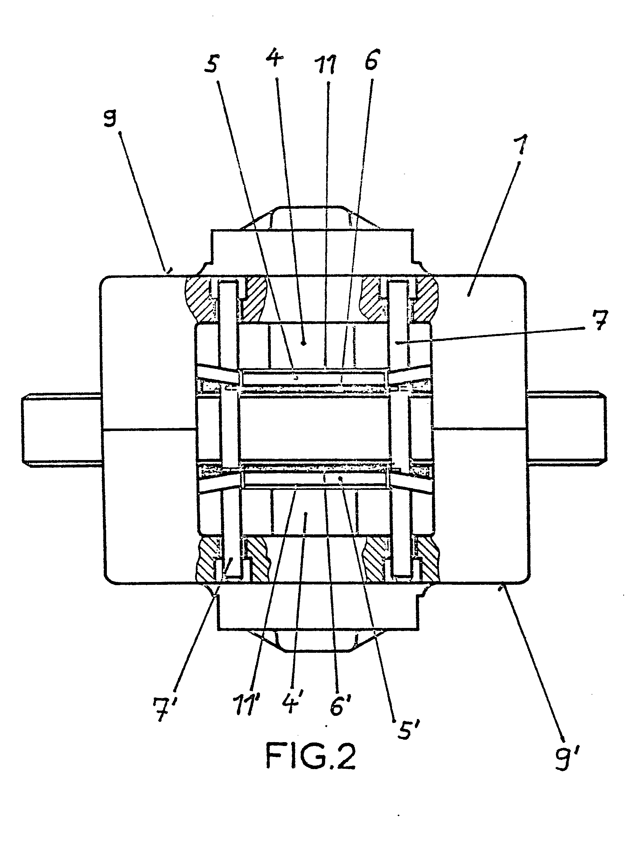

Bei vollständig, bis auf das zulässige Grenzmaß verschlissenen Bremsbelägen 6 und 6' nehmen die Einzelteile die aus Fig. 2 ersichtlichen Lagen ein. Die beiden Bolzen 7 und 7' befinden sich dabei in einer völlig symmetrischen Lage zum Bremssattel 1, wobei sich ihre Enden in einer Ebene mit den Seitenflächen 9 bzw. 9' befinden. Aus dieser Relativlage der Bolzen 7, 7' zum Bremssattel 1 ist von jeder Seite der Bremsscheibe her ohne weiteres erkennbar, daß beide Bremsbeläge 6 und 6' völlig verschlissen sind. Zum Austausch der Bremsbeläge sind die Formfedern 11, 11' von den Belagträgerblechen 5, 5' unter Ausfädelung ihrer Enden aus den Querbohrungen 12, 12' abzunehmen, woraufhin die Bolzen 7 und 7' aus dem Bremssattels 1 herausgenommen werden können. Die verschlissenen Bremsbeläge 6 und 6' können sodann entfernt und nach Zurückdrücken der Stößel 4 und 4' durch neue, unverschlissene Bremsbeläge ersetzt werden. Sodann sind die Bolzen 7 und 7' sowie die Formfedern 11 und 11' wieder einzusetzen. Die Scheibenbremse zeigt dann wieder das aus Fig. 1 ersichtliche Bild.

Der Bolzen 7 zeigt durch seine Koppelung mit dem Bremsbelag 5 dessen Verschleißzustand und der Bolzen 7' durch seine Koppelung mit dem Bremsbelag 6' dessen Verschleißzustand an. Bei ungleichmäßigem Verschleiß der beiden Bremsbeläge 6 und 6' nehmen die beiden Bolzen 7 und 7' entsprechende Stellungen ein, wobei der dem stärker verschlissenen Bremsbelag 6 oder 6' zugeordnete Bolzen 7 oder 7' weitgehender seiner zentrischen Lage zum Bremssattel 1 angenähert ist, als der andere Bolzen 7' bzw. 7. Falls einer der beiden Bolzen 7 oder 7' seine zentrische Lage zum Bremssattel 1 mit eben zu den Seitenflächen 9 und 9' liegenden Bolzenenden erreicht, wird von beiden Seiten der Bremsscheibe aus erkennbar signalisiert, daß ein Bremsbelagwechsel vorgenommen werden muß, auch falls der andere Bremsbelag noch Verschleißvolumen aufweist. Die getrennte Überwachung der beiden Bremsbeläge 6 und 6' steigert die Betriebssicherheit der Scheibenbremse.

Es ist noch hervorzuheben, daß zur getrennten Anzeige des Verschleißzustandes der beiden Bremsbeläge 6 und 6' die an sich zur Halterung dieser Bremsbeläge erforderlichen Bolzen 7 und 7' dienen, diese Bolzen 7 und 7' also eine Doppelfunktion erfüllen und für die Bremsbelagverschleiß-Anzeigevorrichtung praktisch keine zusätzlichen Bauteile erforderlich sind.

In Abänderung zum vorstehend beschriebenen Ausführungsbeispiel ist es natürlich auch möglich, am Bremssattel 1 beispielsweise elektrische Schaltvorrichtungen vorzusehen, welche beim Erreichen der Symmetriestellung der Bolzen 7 und 7' zum Bremssattel 1 geschaltet werden und dabei ein Schauzeichen betätigen. Die Anordnung kann dabei derart getroffen sein, daß jeder der Stößel 4 und 4' in seiner Symmetrielage einen eigenen, elektrischen Kontakt schließt, wobei die beiden elektrischen Kontakte zueinander parallel in den Stromkreis einer Warnlampe eingeschaltet sind.

## Patentansprüche

1. Bremsbelagverschleiß-Anzeigevorrichtung für Festsattel-Scheibenbremsen, mit durch ihre axiale Lage relativ zum Bremssattel (1) den Verschleißzustand anzeigenden Bolzen (7, 7') und bei welchen die beiden gegenläufig an eine Bremsscheibe anpreßbaren Bremsbacken (5, 5', 6, 6') an zwei parallel zur Achsrichtung der Bremsscheibe verlaufenden, beiderseits in Bohrungen (8) der Bremssattels (1) eingreifenden Bolzen (7, 7') geführt sind, dadurch gekennzeichnet, daß die beiden Bremsbacken (5, 5', 6, 6') zumindest in ihrer jeweiligen Anpreßrichtung an die Bremsscheibe (2) mit jeweils einem der ansonsten axialverschieblich beiderseits im Bremssattel (1) und am jeweils anderseitigen Bremsbacken (5, 5', 6, 6') geführten Bolzen (7, 7') gekoppelt sind.

2. Bremsbelagverschleiß-Anzeigevorrichtung nach Anspruch 1, wobei die Bolzen (7, 7') Querbohrungen (12, 12') aufweisen durch in diese eingreifende Formfedern (5, 5') axial gehalten sind, dadurch gekennzeichnet, daß zwei Formfedern (11, 11') vorgesehen sind, deren jede einen der Bolzen (7, 7') mit einer der Bremsbacken (5, 5', 6, 6') verbindet.

3. Bremsbelagverschleiß-Anzeigevorrichtung nach Anspruch 2, dadurch gekennzeichnet, daß die Formfedern (11, 11') in ihrem mittleren Bereich an einem Bremsbelag (6, 6') bzw. Belagträgerblech (5, 5') fixiert sind, mit ihrem einen Schenkel in die Querbohrung (12, 12') eines Bolzens (7, 7') greifen und mit ihrem anderen Schenkel federnd am anderen Bolzen (7, 7') anliegen.

4. Bremsbelagverschleiß-Anzeigevorrichtung nach einem oder mehreren der vorstehenden Ansprüche, dadurch gekennzeichnet, daß die Länge der beidseitig in Durchgangslöchern (8) des Bremssattels (1) geführten Bolzen (7, 7') der Breite des Bremssattes (1) entspricht.

5. Bremsbelagverschleiß-Anzeigevorrichtung nach Anspruch 4, dadurch gekennzeichnet, daß die Durchgangslöcher (8) nach außen offene, erweiterte Endabschnitte (10) mit wenigstens annähernd dem Verschleißmaß entsprechender Tiefe aufweisen.

6. Bremsbelagverschleiß-Anzeigevorrichtung nach Anspruch 4, dadurch gekennzeichnet, daß im Neuzustand der Bremsbeläge (6, 6') die Bolzen (7, 7') auf Seiten der mit ihnen gekoppelten Bremsbacken (5, 5', 6, 6') die Seitenfläche (9, 9') des Bremssattels (1) um das Verschleißmaß überragen.

## Claims

1. Brake lining wear indicator device for fixed caliper disc brakes, with pins (7, 7') indicating the state of wear by means of their axial position relative to the brake caliper (1), and with which the two brake shoes (5, 5', 6, 6') that can be pressed reciprocally against a disc brake, are guided on two pins (7, 7') engaging on both sides in bores (8) of the brakecaliper (1) and running parallel to the axial direction of the disc brake, characterised in that the two brake shoes (5, 5' 6, 6'), at least in their respective pressing direction against the brake disc (2), are coupled to respectively one of the otherwise axially displaceable pins (7, 7') guided on both sides in the brakecaliper (1) and on the respective brake shoe (5, 5', 6, 6') on the other side.

2. Brake lining wear indicator device according to claim 1, whereby the pins (7, 7') have cross bores (12, 12') and are held axially by springs (5, 5') engaging in these, characterised in that two springs (11, 11') are provided, each of which connects one of the pins (7, 7') to one of the brake shoes (5, 5' 6, 6').

3. Brake lining wear indicator device according to claim 2, characterised in that the springs (11, 11') are fixed in their middle zone to a brake lining (6, 6') or brake lining carrier strip (5, 5'), engage with their one limb into the cross bore (12, 12') of a pin (7, 7') and abut resiliently with their other limb on the other pin (7, 7').

4. Brake lining wear indicator device according to one or several of the preceding claims, characterised in that the length of the pins (7, 7') guided on both sides in through bores (8) of the brakecaliper (1) corresponds to the width of the brake caliper (1).

5. Brake lining wear indicator device according to claim 4, characterised in that the through bores (8) have outwardly open enlarged end sections (10) with a depth corresponding at least approximately to the amount of wear.

6. Brake lining wear indicator device according to claim 4, characterised in that when the brake linings (6, 6') are in a new state, the pins (7, 7'), on sides of the brake shoes (5, 5', 6, 6') coupled to them, overhang the lateral surface (9, 9') of the brake yoke (1) by the amount of wear.

## Revendications

1. Dispositif indicateur de l'usure de garnitures de freins pour des freins à disques à étriers fixes, avec des boulons (7, 7') qui indiquent, par leur position oblique par rapport à l'étrier de frein (1), l'état de l'usure, et dans lequel les deux mâchoires de freins (5, 5', 6, 6') qui se déplacent en sens opposé l'une par rapport à l'autre pour s'appliquer contre un disque de frein, sont guidées sur deux boulons (7, 7') qui s'étendent parallèlement à la direction axiale du disque de frein et pénètrent, des deux côtés, dans des perçages (8) de l'étrier de frein (1), caractérisé par le fait que les deux mâchoires de freins (5, 5', 6, 6') sont, au moins dans leur direction respective d'application contre le disque de frein (2) accouplées respectivement à l'un des boulons (7, 7') qui normalement sont guidés axialement, des deux côtés, dans l'étrier de frein (1) et respectivement dans la mâchoire de frein située de l'autre côté.

2. Dispositif indicateur de l'usure des garnitures de freins selon la revendication 1, dans lequel les boulons (7, 7') comportent des perçages transversaux (12, 12') et sont maintenus axialement par des ressorts conformés (5, 5') pénétrant dans ceux-ci, caractérisé par le fait que deux ressorts conformés (11, 11') sont prévus, dont chacun relie l'un des boulons (7, 7') avec l'une des mâchoires de freins (5, 5', 6, 6').

3. Dispositif indicateur de l'usure des garnitures de freins selon la revendication 2, caractérisé par le fait que les ressorts conformés (11, 11') sont fixés par leur partie médiane à une garniture de frein (6, 6') ou à une tôle de support de garniture (5, 5'), qu'ils pénètrent par une branche dans le perçage transversal (12, 12') d'un boulon (7, 7') et qu'ils portent, par leur autre branche, élastiquement contre l'autre boulon (7, 7').

4. Dispositif indicateur de l'usure des garnitures de freins selon l'une ou plusieurs des revendications précédentes, caractérisé par le fait que la longueur des boulons (7, 7') guidés par les deux côtés dans des perçages traversants (8) de l'étrier de frein (1), correspond à la largeur de ce dernier.

5. Dispositif indicateur de l'usure de garnitures de freins selon la revendication 4, caractérisé par le fait que les perçages traversants (8) comportent des sections d'extrémité (10) élargies et ouvertes vers l'extérieur, et possédant une profondeur qui correspond à peu près à la mesure de l'usure.

6. Dispositif indicateur de l'usure des garnitures de freins selon la revendication 4, caractérisé par le fait qu'à l'état neuf des garnitures de freins (6, 6'), les boulons (7, 7') débordent de la mesure de l'usure le côté latéral (9, 9') de l'étrier de frein (1), sur le côté des garnitures de freins (5, 5') avec lesquelles ils sont accouplés.

FIG.1

0 087 631

FIG.2